# FASCICULE DE BREVET EUROPEEN

(11) **EP 3 202 097 B1**
(45) Date de publication et mention de la délivrance du brevet: **23.11.2022**
(21) Numéro de dépôt: 15781391.6
(22) Date de dépôt: 29.09.2015
(51) Int. Cl.: H04L 12/28, H04W 4/80, H04W 4/21, H04W 48/16, H04L 67/51, H04W 84/12, H04W 88/04, H04W 88/16

(54) **TECHNIQUE DE DÉTERMINATION D'UNE PRÉSENCE D'UN DISPOSITIF PÉRIPHÉRIQUE DANS UNE ZONE DE SERVICE D'UN RÉSEAU LOCAL**
TECHNIK ZUR BESTIMMUNG DES VORHANDENSEINS EINER PERIPHEREN VORRICHTUNG IN EINEM DIENSTGEBIET EINES LOKALEN NETZWERKS
TECHNIQUE FOR DETERMINING THE PRESENCE OF A PERIPHERAL DEVICE IN A SERVICE AREA OF A LOCAL NETWORK

(30) Priorité: 30.09.2014 FR 1459283
(43) Date de publication de la demande: 09.08.2017
(73) Titulaire: Orange, 92130 Issy-les-Moulineaux (FR)
(72) Inventeur: FONTAINE, Fabrice, F-35850 Geveze (FR); YAN, Han, 92800 Puteaux (FR)
(86) Numéro de dépôt international: PCT/FR2015/052595
(87) Numéro de publication internationale: WO 2016/051073

(56) Documents cités:
- WO-A1-2013/086036
- US-A1- 2006 056 369
- US-A1- 2007 214 241
- US-A1- 2011 066 756
- US-A1- 2013 262 654
- WEGNER T: "A Modular UPnP Proxy for Secure Remote Access", DIGITAL SOCIETY, 2010. ICDS '10. FOURTH INTERNATIONAL CONFERENCE ON, IEEE, PISCATAWAY, NJ, USA, 10 February 2010 (2010-02-10), pages 72-77, XP031649397, ISBN: 978-1-4244-5805-9

## Description

L'invention se rapporte au domaine général des télécommunications.

L'invention concerne plus particulièrement une technique de détermination d'une présence d'un dispositif périphérique dans une zone de service d'un réseau local.

Un réseau résidentiel comprend des équipements ou dispositifs localisés dans un site client. Ces dispositifs sont également appelés CPE, pour « Customer Premise Equipment ». Pour un réseau local, il s'agit notamment d'une passerelle d'accès, d'un décodeur TV « Set-Top-Box », d'un terminal mobile. Dans le contexte d'un réseau domotique, il s'agit également d'équipements d'électroménager, de systèmes d'alarme, de capteurs. La passerelle d'accès permet aux dispositifs du réseau résidentiel d'accéder à un réseau de communication étendu WAN (pour « Wide Area Network »), tel que le réseau Internet.

Ces dispositifs sont par exemple des terminaux mobiles, tels que des terminaux intelligents « smartphone » ou des tablettes. Une fois connectés à un point d'accès, ils peuvent ainsi recevoir des données en provenance des autres dispositifs du réseau local ou bien de dispositifs connectés au réseau de communication étendu et envoyer des données à destination d'un dispositif du réseau local ou connecté au réseau de communication étendu.

De plus en plus d'objets connectés, tels que des bracelets, des montres, des pèse-personnes, des capteurs météo, sont également proposés au public. Ces objets connectés permettent par exemple de collecter des données pour un utilisateur ou bien pour un environnement. Afin de limiter la consommation énergétique de ces objets connectés, un réseau sans fil basse consommation est utilisé pour transmettre les données collectées à un dispositif doté de capacités de traitement. Il s'agit par exemple d'un réseau d'accès radio de technologie BLE, pour « Bluetooth Low Energy ».

Le protocole mis en œuvre dans un réseau d'accès BLE fonctionne en 2 phases :
- une phase d'annonce où un dispositif BLE de type « périphérique », par exemple l'objet connecté, annonce régulièrement sa présence sur le réseau d'accès BLE par l'intermédiaire d'une trame « LE Advertising Report » qui comprend notamment son adresse MAC BLE, son nom et un niveau de puissance d'un signal radio reçu RSSI (pour « Received Signal Strength Indication ») ;
- une phase de connexion GATT (pour « Generic Attribute Profile ») où un dispositif BLE de type « central » se connecte au dispositif périphérique pour collecter des informations plus détaillées telles que le nom du fabricant, le niveau de la batterie.

Ces objets connectés sont ainsi détectés par un dispositif BLE « central » ou maître. Ce dernier peut se connecter aux objets connectés pour collecter leurs données (fréquence cardiaque, nombre de pas effectués, ...). Ensuite, le dispositif BLE maître peut éventuellement transmettre ces informations par l'intermédiaire du réseau Internet vers des serveurs ou bien des zones de stockage. Ce dispositif maître BLE est par exemple un téléphone intelligent (« smartphone » en anglais).

La portée radio pour ce type de réseau d'accès est très limitée, de l'ordre d'une dizaine de mètres par exemple à l'intérieur d'une habitation. Le dispositif BLE maître doit ainsi se situer à proximité du dispositif BLE « périphérique » pour pouvoir détecter ce dernier. Toutefois, lorsque le dispositif BLE maître, par exemple le téléphone intelligent, s'éloigne du dispositif BLE périphérique voire même quitte l'environnement du réseau local, il n'est plus possible d'obtenir une information quant à la présence du dispositif BLE périphérique dans l'environnement du réseau local.

Le document WEGNER T: "A Modular UPnP Proxy for Secure Remote Access" DIGITAL SOCIETY, 2010. ICDS '10. FOURTH INTERNATIONAL CONFERENCE ON, IEEE, PISCATAWAY, NJ, USA, 10 février 2010 (2010-02-10) décrit une méthode d'accès et d'invocations de services UPnP dans un réseau distant.

La publication brevet US2007/214241A1 décrit une méthode pour accéder à des dispositifs UPnP dans un réseau local.

Un des buts de l'invention est de remédier à des insuffisances/inconvénients de l'état de la technique et/ou d'y apporter des améliorations.

Selon un premier aspect, l'invention a pour objet un procédé de détermination d'une présence d'un dispositif périphérique dans une zone de service d'un réseau local, ledit réseau local comprenant une passerelle d'accès à un réseau de communication et au moins un dispositif relais, ledit dispositif périphérique et le au moins un dispositif relais étant aptes à communiquer avec d'autres dispositifs par l'intermédiaire d'un réseau d'accès radio. Le procédé comprend les étapes suivantes mises en œuvre par la passerelle :
- commande d'au moins un des dispositifs relais, ladite commande requérant une exécution d'une écoute de fréquences d'accès au réseau d'accès radio ;
- réception en provenance dudit au moins un dispositif relais d'une notification de détection du dispositif périphérique, émise par le dispositif relais suite à une réception (F4) d'un message d'annonce en provenance du dispositif périphérique, ledit dispositif périphérique étant alors identifié comme présent dans la zone de service.

Grâce au procédé, la passerelle d'accès du réseau local permet à des dispositifs du réseau local ou bien à des dispositifs à l'extérieur de ce réseau d'obtenir une information sur la présence ou non de dispositifs périphériques dans une zone de service du réseau local. Ces dispositifs périphériques sont des dispositifs simples, ne disposant que d'un module d'accès radio basse consommation pour communiquer. La technologie d'accès radio est par exemple conforme à la technologie « Bluetooth Low Energy ». Les dispositifs périphériques sont par exemple des capteurs et ne sont généralement détectables qu'à partir d'un dispositif maître situé dans leur voisinage. Grâce à la mise en œuvre du procédé, ils sont ainsi intégrés à la topologie du réseau local et visibles de tout dispositif accédant au réseau local.

Leur présence ou leur absence permet en particulier d'en déduire une présence ou une absence d'un utilisateur ou bien encore du dispositif central auquel le dispositif périphérique est généralement associé.

Aucune modification n'est requise au niveau des dispositifs périphériques.

Les dispositifs relais sont connectés au réseau local, plus précisément directement ou indirectement à la passerelle d'accès. Il s'agit par exemple de prises électriques avec une connexion Ethernet et/ou par courant porteur PLC (pour « Power Line Carrier ») et un module d'accès radio de même technologie que les dispositifs périphériques.

La mise en œuvre de l'écoute de fréquences est commandée par la passerelle d'accès. Ceci permet de limiter la consommation énergétique du dispositif relais.

Lorsque la localisation géographique du dispositif relais est connue, il est ainsi possible de localiser approximativement le dispositif périphérique dans la zone de service.

Les différents modes ou caractéristiques de réalisation mentionnés ci-après peuvent être ajoutés indépendamment ou en combinaison les uns avec les autres, aux étapes du procédé de détermination tel que défini précédemment.

Dans un mode de réalisation particulier, le procédé comprend en outre une commande d'activation d'un module d'accès radio dudit dispositif relais préalablement à l'envoi de la commande d'écoute et une commande de désactivation dudit module une fois l'écoute terminée.

Entre deux phases d'écoute de fréquences, le module d'accès radio est mis hors service, c'est-à-dire en veille ou hors tension. Ceci permet de limiter la consommation énergétique des dispositifs relais.

Dans un mode de réalisation particulier, le message d'annonce reçu par le dispositif relais comprend une donnée représentative d'un signal radio reçu du dispositif relais, envoyée à la passerelle en association avec la donnée de détection.

Par analyse de la donnée représentative du signal radio reçu, il est possible de localiser plus finement le dispositif périphérique dans la zone de service.

Dans un mode de réalisation particulier, le message d'annonce reçu par le dispositif relais comprend en outre une adresse dans le réseau local identifiant un dispositif maître contrôlant le dispositif périphérique.

Ainsi, il est également possible de détecter la présence dans la zone de service du réseau local d'un autre dispositif jouant un rôle de maître vis-à-vis du dispositif périphérique.

Dans un mode de réalisation particulier, le procédé comprend, suite à une détection de la présence du dispositif périphérique dans la zone de service, une étape d'exécution d'une action dans le réseau local.

En fonction de la détection de la présence du dispositif périphérique, la passerelle d'accès peut exécuter elle-même une action ou bien commander l'exécution d'une action par un autre dispositif du réseau local. A titre d'exemples illustratifs, l'action correspond à une mise en service d'un module d'accès radio WiFi de la passerelle d'accès, à une mise en service ou hors service du décodeur TV, .... L'action peut également être déclenchée en fonction du dispositif relais qui a détecté la présence du dispositif périphérique.

Avantageusement, le message d'annonce reçu par le dispositif relais comprend en outre une adresse dans le réseau local identifiant un dispositif maître contrôlant le dispositif périphérique et l'action correspond à une activation d'un deuxième module d'accès radio du dispositif relais, afin d'établir une connexion avec le dispositif maître.

En fonction de la détection de la présence du dispositif maître, la passerelle d'accès peut exécuter elle-même une action ou bien commander l'exécution d'une action par un autre dispositif du réseau local.

Dans un mode de réalisation particulier, le procédé comprend en outre une étape d'obtention d'une valeur d'une caractéristique gérée par le dispositif périphérique présent.

Selon un deuxième aspect, l'invention concerne également une passerelle d'accès permettant à au moins un dispositif d'un réseau local d'accéder à un réseau de communication, agencée pour coopérer avec un dispositif relais appartenant au réseau local afin de déterminer une présence d'un dispositif périphérique dans une zone de service du réseau local, ladite passerelle comprenant :
- un module de commande d'au moins un dispositif relais, agencé pour commander au dispositif relais une exécution d'une écoute de fréquences d'accès d'un réseau d'accès radio ;
- un module de réception, agencé pour recevoir en provenance dudit au moins un dispositif relais une notification de détection du dispositif périphérique, émise par le dispositif relais suite à une réception d'un message d'annonce en provenance du dispositif périphérique, ledit dispositif périphérique étant alors identifié comme présent dans la zone de service du réseau local.

Les avantages énoncés pour le procédé de détermination d'une présence selon le premier aspect sont transposables directement à la passerelle d'accès.

Selon un troisième aspect, l'invention concerne également un dispositif relais dans un réseau local, agencé pour coopérer avec une passerelle d'accès permettant aux dispositifs du réseau local d'accéder à un réseau de communication afin de déterminer d'une présence d'un dispositif périphérique dans une zone de service d'un réseau local, ledit dispositif relais comprenant :
- un module de réception, agencé pour recevoir en provenance de la passerelle d'accès une commande d'exécution d'une écoute de fréquences d'accès d'un réseau d'accès radio ;
- un module d'accès radio, agencé pour exécuter une écoute de fréquences d'accès du réseau d'accès radio et pour recevoir un message d'annonce en provenance du dispositif périphérique ;
- un module d'émission, agencé pour envoyer à la passerelle d'accès une notification de détection du dispositif périphérique suite à la réception du message d'annonce.

Les avantages énoncés pour le procédé de détermination d'une présence selon le premier aspect sont transposables directement au dispositif relais.

Selon un quatrième aspect, l'invention concerne également un système de détermination d'une présence d'un dispositif périphérique dans une zone de service d'un réseau local, ledit réseau local comprenant une passerelle d'accès selon le deuxième aspect et au moins un dispositif relais selon le troisième aspect.

Les avantages énoncés pour le procédé de détermination d'une présence selon le premier aspect sont transposables directement au système.

Selon un cinquième aspect, l'invention concerne un programme pour une passerelle d'accès, comprenant des instructions de code de programme destinées à commander l'exécution des étapes du procédé de détermination d'une présence selon le premier aspect, lorsque ce programme est exécuté par la passerelle d'accès et un support d'enregistrement lisible par une passerelle d'accès sur lequel est enregistré un programme pour une passerelle.

Les avantages énoncés pour le procédé de détermination d'une présence selon le premier aspect sont transposables directement au programme pour une passerelle d'accès et au support d'enregistrement.

L'invention sera mieux comprise à l'aide de la description suivante de modes de réalisation particuliers de la technique de détermination d'une présence, en référence aux dessins annexés sur lesquels :
- la figure 1 représente un environnement dans lequel est mise en œuvre la technique de détermination d'une présence ;
- la figure 2a illustre des étapes d'un procédé de détermination d'une présence selon un mode particulier de réalisation ;
- la figure 2b illustre des étapes pour obtenir une donnée, représentative d'une valeur prise par une caractéristique, gérée par un dispositif périphérique présent selon un mode particulier de réalisation ;
- la figure 3 représente une passerelle d'accès selon un mode particulier de réalisation ;
- la figure 4 représente un dispositif relais selon un mode particulier de réalisation.

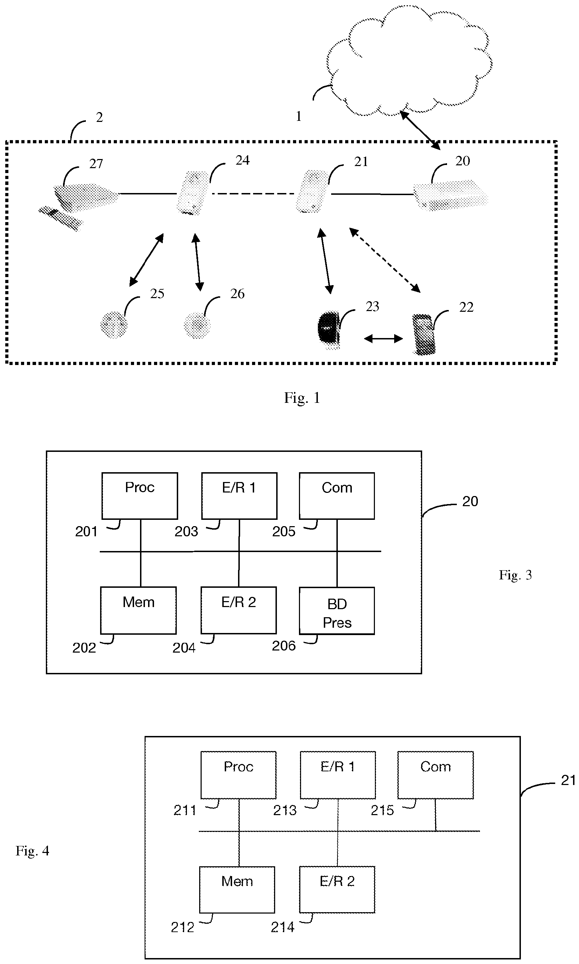

La figure 1 représente, dans son environnement, un réseau de communication local 2, privé ou résidentiel. Une passerelle d'accès 20 permet à des dispositifs du réseau local 2 d'accéder à un réseau de communication étendu 1 ou WAN (pour « Wide Area Network »), tel que le réseau Internet.

Le réseau local s'appuie sur diverses technologies réseau, telles qu'un réseau filaire de type Ethernet selon la norme IEEE 802.3, un réseau sans fil de type Wi-Fi selon la norme IEEE 802.11 ou bien encore un réseau par courant porteur en ligne PLC (par exemple HomePlug ^{®}, Alliance HD-PLC) selon la norme IEEE 1901, ou bien encore un réseau pour câble coaxial de type MoCA^{®}, pour « Multimédia over Coax ».

Les dispositifs du réseau local 2 peuvent être n'importe quels dispositifs, par exemple domestiques, disposant d'une connexion réseau filaire ou sans-fil. Il peut s'agir par exemple d'un téléphone mobile 22, de prises PLC 21, 24, d'un décodeur TV 27 (« Set-Top Box »), d'une console de jeux (non représentée).

Tel que représenté sur la figure 1, la passerelle 20 est connectée par une liaison filaire Ethernet selon la norme IEEE 802.3 à la prise PLC 21. Cette dernière communique avec la prise PLC 24 au moyen d'une technologie utilisant les courants porteurs. Cette technologie est par exemple conforme à la spécification IEEE 1901-2010, intitulée « IEEE Std 1901-2010, IEEE Standard for Broadband over Power Line Networks: Medium Access Control and Physical Layer Spécifications ». Au niveau réseau, les échanges entre la passerelle d'accès 20 et les prises PLC 21, 24 sont conformes au protocole réseau UPnP, pour « Universal Plug and Play », promulgué par le forum UPnP. La norme UPnP a pour but de permettre à des dispositifs de se connecter aisément et de communiquer simplement au sein d'un tel réseau. Elle constitue un ensemble de protocoles de communication basés sur le protocole IP (Internet Protocol, protocole de base pour les réseaux de type Internet). Pour contrôler les dispositifs du réseau, le protocole UPnP utilise des points de contrôle. Dans le mode de réalisation décrit, la passerelle d'accès 20 est un point de contrôle du réseau local. Un point de contrôle émet classiquement vers les différents dispositifs du réseau local des messages dits de découverte afin d'obtenir en retour une description des dispositifs correspondant à la requête. Ces messages de découverte sont émis le plus souvent en mode de communication point vers multipoint, aussi appelé multicast, du point de contrôle vers les dispositifs. Un dispositif terminal compatible avec la norme UPnP répond à ces messages de requête, et émet de surcroît, à fréquence régulière, des messages de présence pour signifier qu'il est actif et connecté sur le réseau.

Le décodeur TV 27 est quant à lui connecté à la prise PLC 24 par une liaison filaire Ethernet et accède ainsi au réseau local. Les dispositifs du réseau local une fois connectés peuvent accéder au réseau de communication étendu 1 par l'intermédiaire de la passerelle d'accès 20.

Une zone de service du réseau local correspond à une zone géographique dans laquelle les dispositifs du réseau local peuvent communiquer directement ou indirectement avec la passerelle d'accès 20. Cette zone de service correspond par exemple à un immeuble d'habitation d'un utilisateur. Des prises PLC sont disposés par exemple dans chaque pièce de l'habitation.

Dans une zone de service du réseau local, d'autres dispositifs, dits dispositifs périphériques, sont également présents. Il s'agit par exemple d'un détecteur de fumée 25, de dispositifs électroménagers (non représentés), d'un capteur 26, d'une montre connectée 23. Ces différents dispositifs périphériques sont agencés pour communiquer sur un premier réseau d'accès radio et comprennent chacun un module d'accès radio.

Le premier module d'accès radio est de type radio basse consommation selon une première technologie d'accès, telle que Bluetooth ^{®} Low Energy BLE. Cette technologie d'accès BLE est définie par un groupe de normalisation Bluetooth SIG sous la forme d'un ensemble de documents, nommé « Bluetooth Core Specification 4.1 ».

Dans le mode de réalisation décrit, les prises PLC 21, 24 sont également agencées pour communiquer sur le premier réseau d'accès radio et comprennent chacune un premier module d'accès radio de type basse consommation selon la première technologie d'accès BLE. Ces prises PLC jouent un rôle de relais vis-à-vis de la passerelle d'accès lors de la mise en œuvre du procédé décrit ultérieurement. Ces prises PLC sont ainsi également appelées dispositifs relais.

Le détecteur de fumée 25 et le capteur 26 se trouvent dans une zone de couverture radio de la prise PLC 24. La montre connectée 23 se situe dans une zone de couverture radio de la prise PLC 21. La taille de ces zones de couverture dépend de la technologie radio utilisée et de l'environnement. Pour une technologie BLE, ces zones de couverture sont de l'ordre d'une dizaine de mètres.

Dans un mode de réalisation particulier, les premiers modules d'accès radio des prises PLC 21, 24 sont activables et désactivables à distance par la passerelle d'accès 20. Un état d'activation est associé à chaque premier module d'accès radio et peut prendre une valeur « activé » ou « désactivé ».

Dans le contexte des économies d'énergie, le forum UPnP a défini le profil dit « Energy Management » dans la spécification « EnergyManagement for UPnP 1.0 » du 30 août 2013 qui permet aux dispositifs de publier la liste de leurs interfaces réseaux (nom, description, adresse physique, adresse réseau, type, etc.) et en particulier le statut des interfaces (active, désactivée sans réveil automatique, désactivée avec réveil périodique, etc.) et la méthode de réveil à utiliser pour les sortir d'un état de veille.

Un exemple d'une table de description d'un ou plusieurs dispositifs du réseau et de leurs interfaces est fourni ci-dessous dans le contexte de la norme UPnP « Energy Management » ; on représente en syntaxe de description XML (de l'Anglais« eXtended Markup Language ») la prise PLC, en supposant qu'elle dispose d'une interface Bluetooth LE.

### Exemple de description d'une prise PLC :

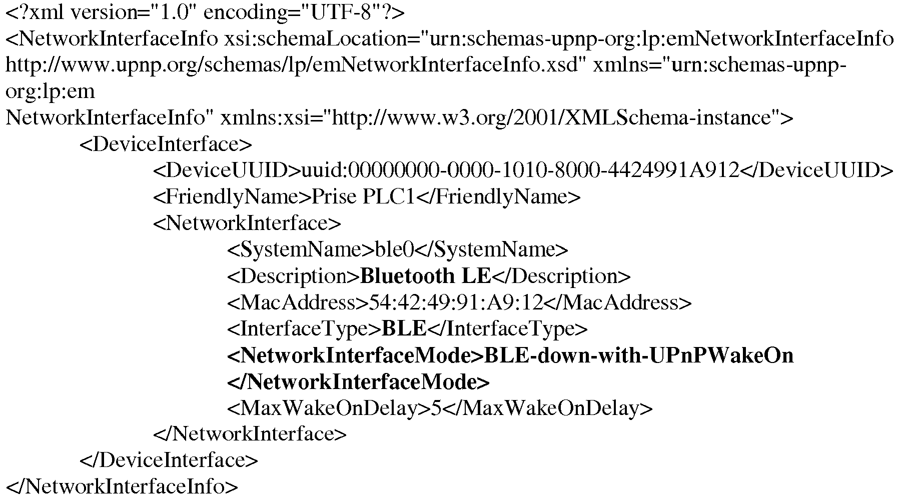

Ce fichier d'exemple comprend une liste d'une interface (*DeviceInterface*), décrite entre une balise ouvrante <NetworkInterface > et une balise fermante </ NetworkInterface>.

L'interface est de type Bluetooth LE (<Description>Bluetooth LE</Description>). Elle est inactive et activable par un nouveau message UPnP appelé « BLE-down-with-UPnPWakeOn ». Cette interface est réveillée lors de la réception d'un message « X_WakeOn » sur l'interface IP.

La syntaxe XML du fichier représentatif des interfaces de la prise est globalement conforme à la spécification UPnP « Energy Management » mentionnée auparavant, sauf pour ce qui concerne les deux éléments suivants :
- la balise « InterfaceType » permet de spécifier une interface à basse consommation, dans notre exemple de type Bluetooth LE ;
- la balise « NetworkInterfaceMode » permet de spécifier qu'une interface est désactivable (« BLE-up-with-UPnPStandby ») par un nouveau message UPnP appelé « X_Standby », dont une syntaxe possible est proposée ci-dessous, ou activable (« BLE-down-with-UPnPWakeOn ») via le message « X_WakeOn ».

### Exemple de syntaxe pour le message X Standby :

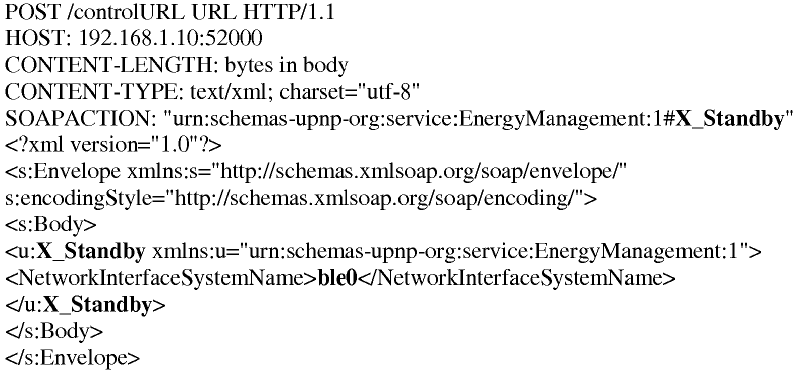

### Exemple de syntaxe pour le message X WakeOn :

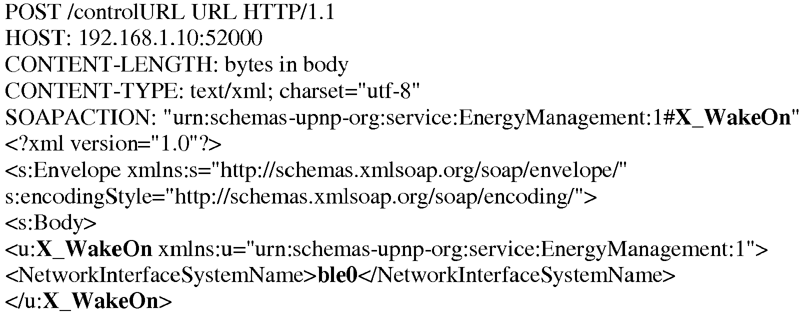

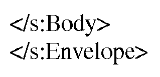

On notera que ces données XML ne constituent qu'un exemple de données de description et que l'invention peut également s'appliquer à des données de description conformes à une autre norme, telle que le protocole COAP (pour « Constrained Application Protocol »), le protocole Alljoyn défini par l'Alliance Allseen.

Dans un mode de réalisation particulier, les prises PLC 21, 24 sont également agencées pour communiquer sur un second réseau d'accès radio et comprennent chacune un second module d'accès radio selon une seconde technologie d'accès radio, telle que le WiFi (pour « Wireless Fidelity ») selon la norme IEEE 802.11 « Wireless LAN Medium Access Control (MAC) and Physical Layer (PHY) Spécifications » (802.11a/b/g/n/ac). Dans ce cas, les prises PLC 21, 24 ont également un rôle d'extension du réseau d'accès radio WiFi (« WiFi extender » en anglais). Dans une variante de ce mode de réalisation particulier, les seconds modules d'accès radio des prises PLC 21, 24 sont activables et désactivables à distance par la passerelle d'accès 20 par exemple par un message UPnP « X_WakeOn » ou « X_Standby ». Un état d'activation est associé à chaque second module d'accès radio et peut prendre une valeur « activé » ou « désactivé ». La syntaxe XML du fichier représentatif des interfaces de la prise comprend alors une interface supplémentaire (*DeviceInterface*), décrite entre une balise ouvrante <NetworkInterface > et une balise fermante </ NetworkInterface>. L'interface est de type WiFi (<Description>Wi-Fi</Description>). Elle est inactive et activable par un nouveau message UPnP appelé « IP-down-with-UPnPWakeOn ». Cette interface est réveillée lors de la réception d'un message « X_WakeOn » sur l'interface IP. Elle est désactivable (« IP-up-with-UPnPStandby ») par le nouveau message UPnP appelé « X_Standby ». Le téléphone intelligent 22 se trouve par exemple sur la figure 1 dans la zone de couverture WiFi de la prise PLC 21.

Il est bien entendu que la passerelle d'accès 20 peut également disposer d'un module d'accès radio de type Wi-Fi. Elle offre alors un accès au réseau de communication étendu 1 à des dispositifs situés dans une zone de couverture radio (non représentés sur la figure 1). La passerelle d'accès 20 communique ainsi avec des dispositifs qui sont localisés dans sa zone de couverture radio par l'intermédiaire d'une connexion sans fil.

On rappelle ici que le réseau local représenté sur la figure 1 correspond à un exemple de réalisation. Aucune limitation n'est attachée au nombre de dispositifs relais, de dispositifs utilisateurs, de dispositifs périphériques, ni aux types de ces dispositifs.

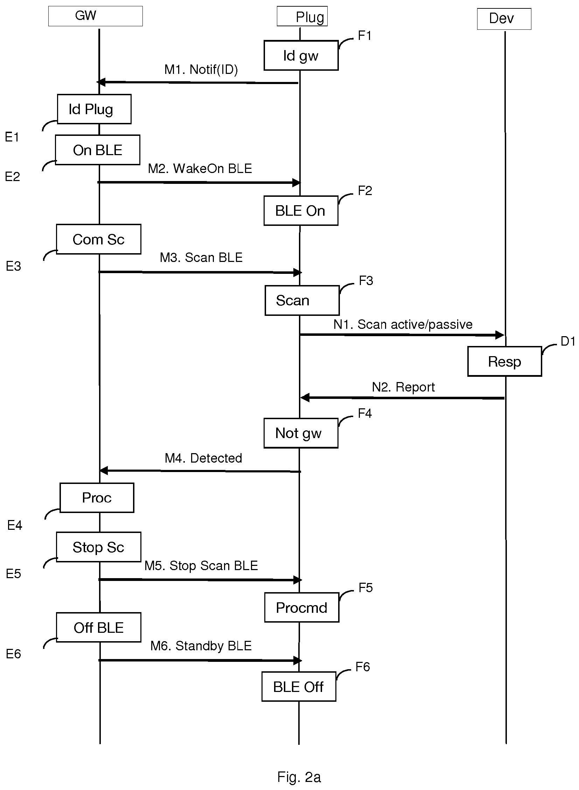

Nous allons maintenant décrire, en relation avec la figure 2a, la technique de détermination d'une présence d'un dispositif périphérique dans une zone de service d'un réseau local dans des modes particuliers de réalisation, mise en œuvre par la passerelle d'accès 20 en collaboration avec un des dispositifs relais 21, 24. Les étapes sont décrites par la suite pour la prise PLC 21 en tant que dispositif relais. Il est bien entendu que ces étapes sont également mises en œuvre pour la prise PLC 24.

A l'état initial, le premier module d'accès radio du dispositif relais 21 est dans un état d'activation « désactivé », c'est-à-dire éteint ou mis en veille. On rappelle ici que ce premier module d'accès radio correspond à un module BLE.

Dans une étape F1, le dispositif relais 21 annonce sa présence sur le réseau local en diffusant un message de notification M1-Notif. Le message M1-Notif comprend un identifiant du dispositif relais. Le message M1 correspond par exemple à un message protocolaire SSDP (pour « Simple Service Discovery Protocol ») NOTIFY « ssdp:alive ». Le protocole SSDP est défini par l'IETF dans un document draft-cai-ssdp-v1-03.txt « Simple Service Discovery Protocol/1.0 Operating without an Arbiter » d'octobre 1999. Il permet de découvrir des services offerts sur un réseau et notamment le service de gestion de l'énergie « urn:schemas-upnp-org:service:EnergyManagement:1 » et un service de découverte BLE appelé « urn:schemas-upnp-org:service:blediscovery:1 ». L'identifiant du dispositif relais correspond par exemple à un identifiant universel unique UUID (pour « Universally Unique Identifier »).

### Exemples de message de notification envoyé par le dispositif relais pour publier la présence des services EnergyManagement et blediscovery :

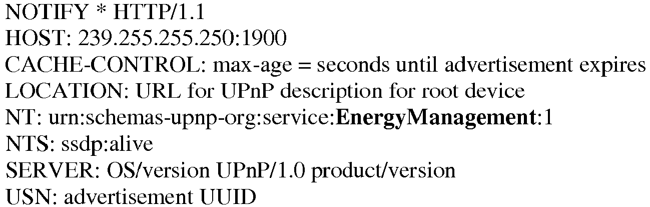

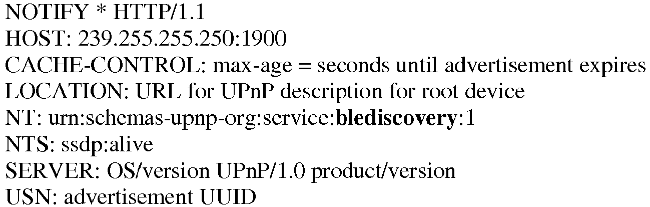

Dans une étape E1, la passerelle d'accès 20 reçoit le message de notification N1 en provenance du dispositif relais 21. La passerelle d'accès 20 est ainsi informée des services et des dispositifs relais qui sont présents dans le réseau local.

### Exemple de message permettant à la passerelle d'accès de détecter la présence du service blediscovery :

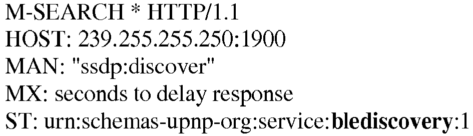

Dans une étape E2, la passerelle d'accès 20 commande une activation du module d'accès radio BLE du dispositif relais 21, c'est-à-dire une mise en service. Cette mise en service peut correspondre à une sortie d'un état de veille ou bien à une mise sous tension du module. L'état d'activation du module est alors « activé ». Cette commande est effectuée par l'envoi d'un message M2-WakeOn BLE. Le message M2 correspond par exemple au message X_WakeOn défini précédemment dans un contexte UPnP Energy Management.

Ce message de commande M2 est reçu par le dispositif relais 21 dans une étape F2 et ce dernier active alors son module d'accès radio BLE.

Dans une étape E3, la passerelle d'accès 20 commande le dispositif relais 21 pour que ce dernier exécute une écoute de fréquences d'accès au réseau d'accès radio BLE. Cette écoute de fréquences est généralement connue sous le terme de « scan » et permet de détecter la présence de dispositifs périphériques. Un message de commande M3- Scan BLE est transmis par la passerelle d'accès 20 au dispositif relais 21. Le message M3 correspond par exemple à un message UPnP X_StartBLEScan.

### Exemple de syntaxe pour le message X StartBLEScan :

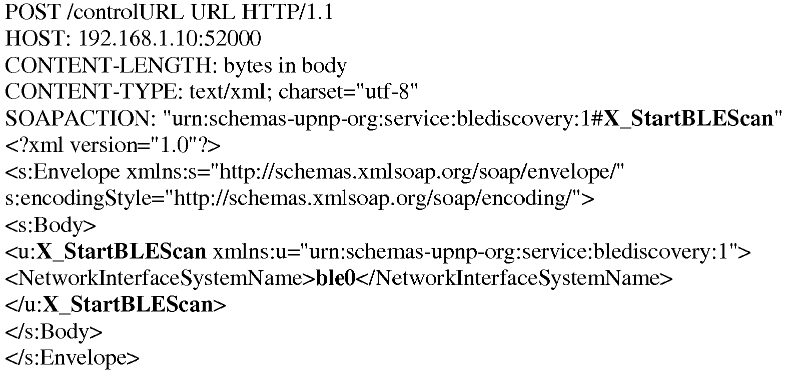

Dans un mode de réalisation particulier, le message M3 comprend un premier paramètre dl indiquant une durée pendant laquelle cette écoute de fréquences doit être effectuée. Dans un mode de réalisation particulier alternatif ou cumulatif au mode de réalisation précédent, le message M3 comprend un deuxième paramètre temporel d2 indiquant à quelle fréquence cette écoute de fréquences doit être effectuée. Ainsi, la passerelle d'accès 20 peut commander une écoute de fréquences de dl secondes toutes les d2 secondes.

La passerelle d'accès 20 peut ainsi contrôler les écoutes de fréquences BLE mises en œuvre par le dispositif relais 21. Ceci permet de limiter la consommation énergétique du dispositif relais 21. Cette commande d'écoute de fréquences E3 peut être déclenchée de manière régulière par la passerelle d'accès 20. Elle peut également être déclenchée suite à la réception d'une requête d'obtention d'une donnée de présence relative à un dispositif périphérique. Cette requête peut être émise par un dispositif accédant à la passerelle d'accès 20 à partir du réseau de communication étendu ou bien du réseau local 2.

Il est ici souligné que la passerelle d'accès 20 peut commander l'écoute de fréquences aux deux prises PLC 21, 24 simultanément ou successivement. L'écoute de fréquences peut également n'être commandée qu'à une seule des deux prises PLC 21, 24 par exemple en fonction de la dernière localisation du dispositif périphérique, en fonction d'une heure où cette étape est mise en œuvre.

Dans une étape F3, le dispositif relais 21 reçoit le message de commande M3 et le cas échéant les paramètres temporels associés et démarre une écoute de fréquences BLE. Cette écoute de fréquences peut être active, avec un envoi d'un message N1 sollicitant les dispositifs périphériques afin que ces derniers se signalent (« LE Set Scan Enable Command » défini dans le document de spécifications « BLUETOOTH SPECIFICATION Version 4.1 »), ou passive.

Dans une étape D1, le dispositif périphérique 23 détecte qu'il doit se signaler auprès du dispositif relais et transmet un message N2-Report sur une des fréquences dédiées à cette écoute. Ce message N2 correspond à un message d'annonce « LE Advertising Report », défini également dans ce document de spécifications Bluetooth, comprenant notamment le nom du dispositif périphérique (« Local Name »), une adresse, par exemple l'adresse MAC, et une donnée représentative d'un signal radio RSSI, pour « Received Signal Strength Indication ». Lorsque l'écoute de fréquence est active, ce message N2 comprend un élément « Event_Type » égal à « Scan Response ». Dans le cas contraire (écoute passive), ce message N2 comprend un élément

### « Event_Type » égal à « connectable (undirected/directed) advertising ».

Le nom du dispositif périphérique « Local Name » peut prendre les valeurs « Shortened Local Name » et « Complete Local Name ». Il permet d'identifier simplement le dispositif périphérique. Lorsqu'il n'est pas présent dans le message N2, il peut être obtenu dans un échange ultérieur.

Ce message N2 d'annonce est reçu par le dispositif relais 21 dans une étape F4. Toujours dans cette étape F4, suite à la réception du message d'annonce N2, le dispositif relais 21 transmet une notification M4-Detected de détection du dispositif périphérique 23 à la passerelle 20. La notification de détection M4 comprend par exemple le nom du dispositif périphérique détecté et/ou l'adresse du dispositif périphérique détecté. Dans un mode de réalisation particulier, la notification de détection M4 est un message de la couche protocolaire GENA (pour « Generic Event Notification Architecture »). Le protocole GENA défini dans le document de l'IETF « draft-cohen-gena-p-base-01.txt » permet dans un réseau UPnP d'annoncer des événements par un mécanisme de souscription.

### Exemple de notification GENA

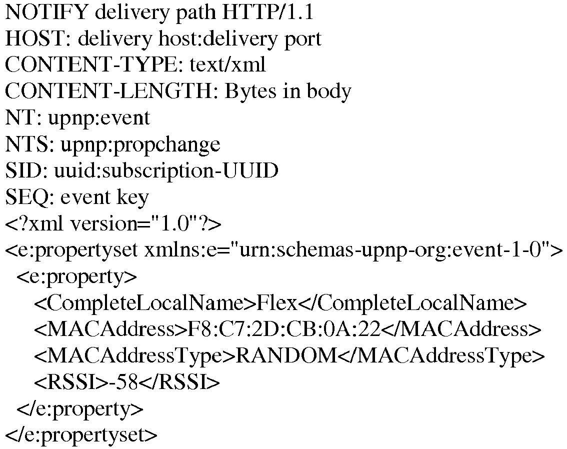

Dans un autre mode de réalisation particulier, la notification de détection M4 est un message protocolaire Alljoyn.

Cette notification de détection M4 est reçue par la passerelle d'accès 20 dans une étape E4. Le dispositif périphérique 23 est alors identifié comme présent dans la zone de service du réseau local. Cette information de présence du dispositif périphérique 23 est mémorisée dans une mémoire de stockage comprenant une liste de dispositifs périphériques L. La passerelle d'accès 20 peut également établir une localisation plus précise de ce dispositif périphérique 23 en fonction de la localisation du dispositif relais 21. Cette localisation est également mémorisée dans la liste L. Du fait du rôle central de la passerelle d'accès 20 et de sa connexion au réseau de communication Internet 1, il est alors possible à un utilisateur extérieur au réseau local d'accéder à cette information de présence du dispositif périphérique 23. A titre d'exemple illustratif, lorsque le dispositif périphérique 23 correspond à une montre connectée au poignet d'un enfant, un utilisateur adulte peut prendre connaissance du fait que l'enfant est rentré à la maison (c'est-à-dire dans la zone de service du réseau local).

Dans une étape E5, la passerelle d'accès 20 commande le dispositif relais 21 pour que ce dernier arrête l'exécution de l'écoute de fréquences d'accès au réseau d'accès radio BLE. Un message de commande M5- Stop Scan BLE est transmis par la passerelle d'accès 20 au dispositif relais 21. Le message M5 correspond par exemple à un message UPnP X_StopBLEScan.

### Exemple de syntaxe pour le message X StopBLEScan :

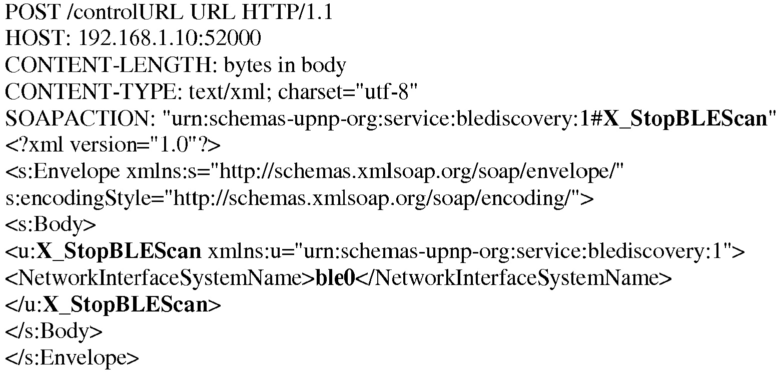

Dans une étape F5, le dispositif relais 21 reçoit le message de commande M5 et arrête l'écoute de fréquences BLE. Ceci permet de limiter la consommation énergétique du dispositif relais 21 ainsi que la consommation sur les dispositifs périphériques qui n'ont plus à répondre à des requêtes de découverte.

Dans une étape E6, la passerelle d'accès 20 commande une désactivation du module d'accès radio BLE du dispositif relais 21, c'est-à-dire une mise hors service. Cette mise hors service peut correspondre à un passage dans un état de veille ou bien à une mise hors tension du module. L'état d'activation du module est alors « désactivé ». Cette commande est effectuée par l'envoi d'un message M6-Standby BLE. Le message M6 correspond par exemple au message X_Standby défini précédemment dans un contexte UPnP Energy Management.

Ce message de commande M6 est reçu par le dispositif relais 21 dans une étape F6 et ce dernier désactive alors son module d'accès radio BLE. Ceci permet de limiter la consommation énergétique du dispositif relais 21.

Les étapes décrites précédemment reposent sur la mise en œuvre d'un protocole entre la passerelle d'accès mettant en œuvre le protocole IP et la prise PLC mettant en œuvre également en œuvre le protocole IP et le protocole BLE. Le protocole défini permet notamment par l'intermédiaire de l'interface IP :
- de commander l'activation ou la désactivation d'un module d'accès radio BLE ;
- de commander le démarrage ou l'arrêt d'une écoute de fréquences par le module d'accès radio BLE :
- d'obtenir une notification de présence d'un dispositif périphérique suite à la réception d'un message d'annonce par l'intermédiaire du module d'accès radio BLE.

La solution proposée ici consiste à mettre en œuvre un protocole entre un dispositif IP classique du type Livebox et un ou plusieurs dispositifs implémentant le protocole BLE et le protocole IP (dans notre cas des prises PLC).

Le mode de réalisation a été décrit dans un cas où la présence du dispositif périphérique 23 est détectée à l'étape E4. La réception d'une notification de présence M4 est supervisée par une temporisation. Lorsque cette temporisation expire, la passerelle d'accès 20 met à jour la liste L des dispositifs périphériques présents en ajoutant ceux qui se sont annoncés, en supprimant ceux qui ne se sont pas annoncés, en modifiant leur localisation en cas de changement.

Dans un mode de réalisation particulier, une localisation plus précise du dispositif périphérique est réalisée par la passerelle d'accès 20. On rappelle qu'à l'étape F4, le dispositif relais 21 reçoit le message d'annonce N2-Report en provenance du dispositif périphérique 23. Ce message N2 comprend notamment une donnée représentative d'un signal radio RSSI, pour « Received Signal Strength Indication ». Ce message N2 d'annonce est reçu par le dispositif relais 21 à l'étape F4. Toujours dans cette étape F4, le dispositif relais 21 transmet la notification M4-Detected de détection du dispositif périphérique 23 à la passerelle 20. La notification de détection M4 comprend alors également la donnée représentative d'un signal radio RSSI. Lors de la réception de cette notification M4, la passerelle d'accès 20 peut alors déterminer à partir de la donnée RSSI une distance entre le dispositif périphérique 23 et le dispositif relais 21. A partir de cette distance, la passerelle d'accès 20 peut déterminer si le dispositif périphérique 23 est très proche (inférieure à 0,5 m), proche (de l'ordre de 1 à 3 m) ou éloigné (plusieurs mètres) du dispositif relais 21. La passerelle d'accès 20 peut également, lorsque plusieurs dispositifs relais ont détecté un dispositif périphérique, déterminer duquel le dispositif périphérique est le plus proche.

Dans un autre mode de réalisation particulier, le message d'annonce N2 reçu par le dispositif relais 21 comprend en outre une adresse dans le réseau local identifiant un dispositif maître 22 contrôlant le dispositif périphérique 23. Cette adresse correspond par exemple à l'adresse MAC du dispositif maître 22. Ce message N2 d'annonce est reçu par le dispositif relais 21 à l'étape F4. Toujours dans cette étape F4, le dispositif relais 21 transmet la notification M4-Detected de détection du dispositif périphérique 23 à la passerelle 20. La notification de détection M4 comprend alors également l'adresse dans le réseau local identifiant le dispositif maître 22 contrôlant le dispositif périphérique 23. Suite à la réception de cette notification M4, la passerelle d'accès 20 peut associer la détection du dispositif périphérique 23 avec la présence du dispositif maître 22, qui est par ailleurs connu au niveau IP, c'est-à-dire du réseau local. Grâce à cette association, une action peut être exécutée par un des dispositifs du réseau local. A titre d'exemple illustratif, lorsque le dispositif relais 21 joue également un rôle d'extension du réseau WiFi (« WiFi extender ») et dispose donc d'un deuxième module d'accès radio de type WiFi, la passerelle d'accès 20 peut commander une activation de ce module d'accès radio WiFi afin que le dispositif maître 22 puisse se connecter au réseau local par l'intermédiaire du dispositif relais 21. Cette interface WiFi est réveillée lors de la réception par la prise PLC 21 d'un message « X_WakeOn » sur l'interface IP, tel que décrit précédemment. Le dispositif maître 22 peut alors accéder au réseau local en établissant une connexion avec le dispositif relais 21.

Dans un autre mode de réalisation particulier, suite à une détection de la présence du dispositif périphérique 23 dans la zone de service, la passerelle d'accès 20 déclenche l'exécution d'une action dans le réseau local. A titre d'exemples illustratifs d'actions, il peut s'agir de mettre en service ou hors service un module d'accès radio WiFi de la passerelle d'accès 20, de mettre en service ou hors service le décodeur TV 27, de transférer un flux d'un dispositif TV principal vers un dispositif TV secondaire situé par exemple dans une chambre, de déclencher le chauffage, de démarrer le lave-vaisselle ...

Ces actions peuvent être configurées à l'avance dans une table associant une présence d'un dispositif périphérique avec une action. Alternativement, la passerelle d'accès 20 peut mettre en œuvre une phase d'apprentissage pour établir cette table, en effectuant des corrélations entre des évènements de détection de présence se produisant à une heure donnée et des actions déclenchées par le ou les utilisateurs localisés dans la zone de service du réseau local.

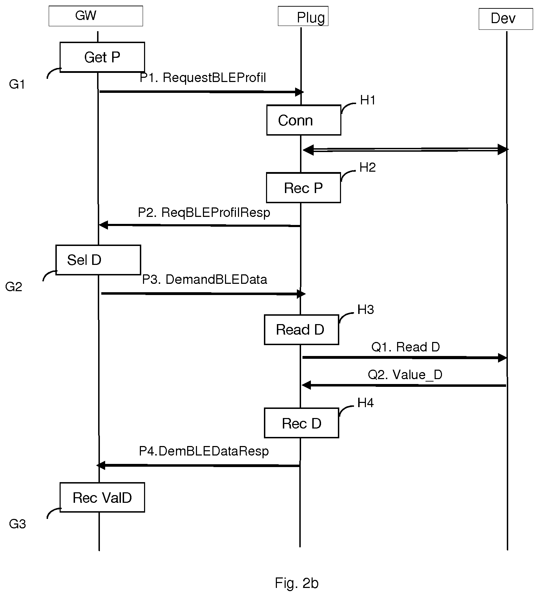

Dans un autre mode de réalisation, illustré par la figure 2b, la passerelle d'accès 20 et le dispositif relais 21, ayant détecté un dispositif périphérique 23 dans la zone de service, mettent en œuvre une phase d'obtention d'une ou de valeurs de caractéristiques associées à un service offert par le dispositif périphérique. Les messages échangés entre la passerelle d'accès 20 et le dispositif relais 21 sont conformes au protocole UPnP. Les messages échangés entre le dispositif relais 21 et le dispositif périphérique 23 sont conformes au protocole BLE.

A l'état initial, le premier module d'accès radio du dispositif relais 21 est dans un état d'activation « activé », c'est-à-dire en service. La méthode pour le passer d'un état d'activation « désactivé » à « activé » a été décrite précédemment et est mise en œuvre si besoin. Par ailleurs, lorsque ces étapes sont effectuées consécutivement à la détection du dispositif périphérique 23, l'étape E6 décrite précédemment peut ne pas être exécutée afin de conserver le premier module d'accès radio en service.

Dans une étape G1, la passerelle d'accès 20 envoie une commande P1 RequestBLEProfile au dispositif relais 21, commandant au dispositif relais 21 de se connecter au dispositif périphérique 23 et d'obtenir un profil GATT (« Generic Attribute Profile »). Le dispositif périphérique 23 est identifié par son adresse, par exemple son adresse MAC, obtenue à l'étape F4. On rappelle ici que le profil GATT est organisé hiérarchiquement en sections, appelées services, qui regroupent des données appelées caractéristiques. Une caractéristique peut correspondre par exemple au niveau de batterie, au taux d'humidité, au taux de luminosité, au nombre de pas effectués par un utilisateur, ... Une caractéristique est identifiée par un identifiant universel unique UUID (pour « Universally Unique Identifier »). Une telle demande RequestBLEProfile est par exemple est un message de la couche protocolaire SOAP (pour « Simple Object Access Protocol ») dans un réseau UPnP et fait partie du service de découverte BLE « blediscovery » décrit précédemment. Le protocole SOAP permet dans un réseau UPnP d'invoquer des actions.

### Exemple de message de demande

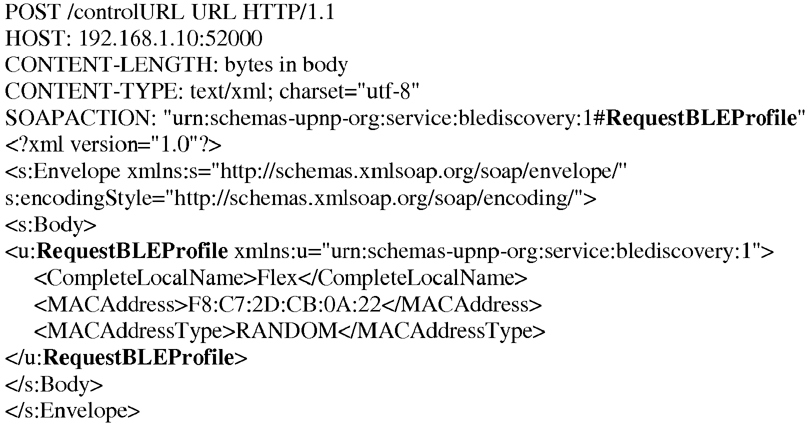

Cette commande P1 est reçue par le dispositif relais 21 dans une étape H1. Le dispositif relais 21 établit alors une connexion avec le dispositif périphérique 23 identifié selon le mécanisme défini par Bluetooth LE. Cette connexion est symbolisée sur la figure 2b par une double flèche. Puis dans une étape H2, le dispositif relais 21 reçoit le profil GATT du dispositif périphérique 23 et le transfère à la passerelle d'accès 20 dans un message de réponse P2 RequestBLEProfileResponse.

Le profil GATT est reçu par la passerelle d'accès 20 dans une étape G2. Une telle réponse RequestBLEProfileResponse est par exemple conforme au protocole UPnP et fait partie du service de découverte BLE « blediscovery » décrit précédemment.

### Exemple de message de réponse pour un capteur de pression sanguine

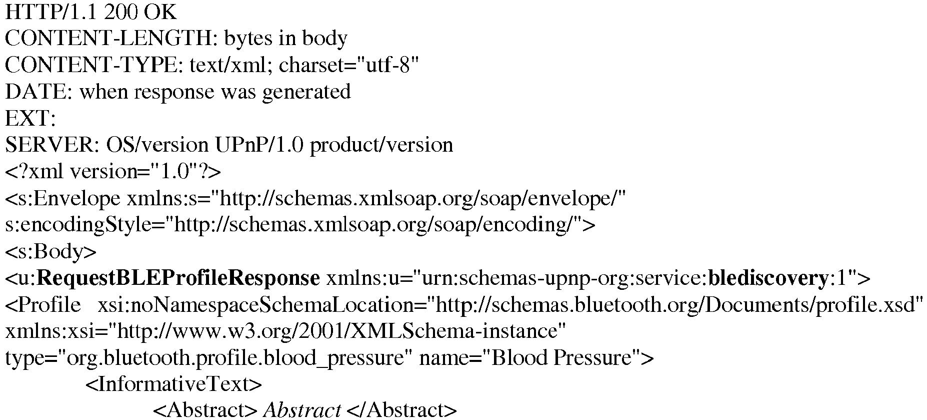

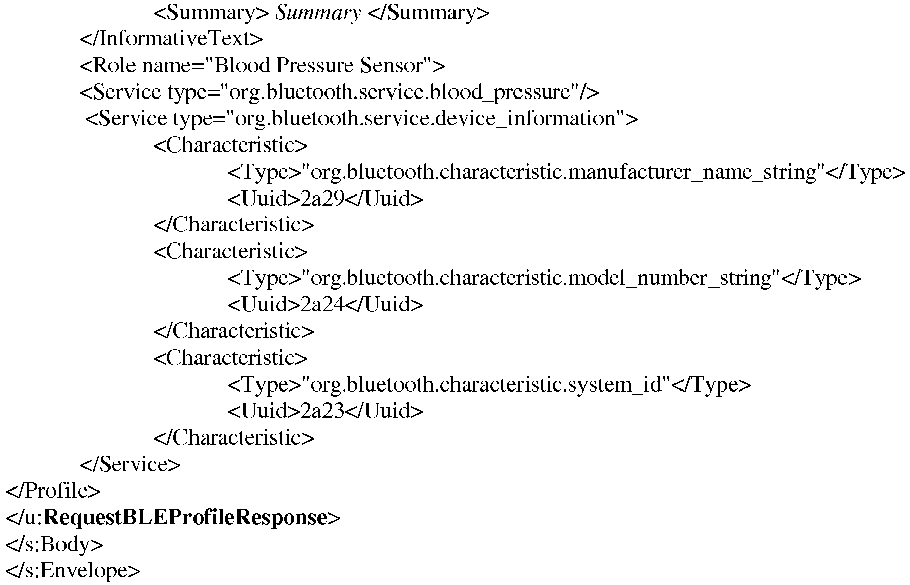

Toujours dans cette étape G2, une caractéristique est sélectionnée à partir du profil GATT reçu. Cette sélection est par exemple configurée en fonction du type de dispositif périphérique. Elle peut également être effectuée par une application s'exécutant sur la passerelle d'accès 20 ou bien un dispositif distant accédant à la passerelle d'accès 20.

Une commande P3 DemandBLEData est alors envoyée de la passerelle d'accès 20 au dispositif relais 21, commandant à ce dernier d'obtenir une valeur de la caractéristique sélectionnée identifiée par son identifiant universel unique. Une telle demande DemandBLEData est par exemple conforme au protocole UPnP et fait partie du service de découverte BLE « blediscovery » décrit précédemment.

### Exemple de message de demande de caractéristique (Niveau de batterie)

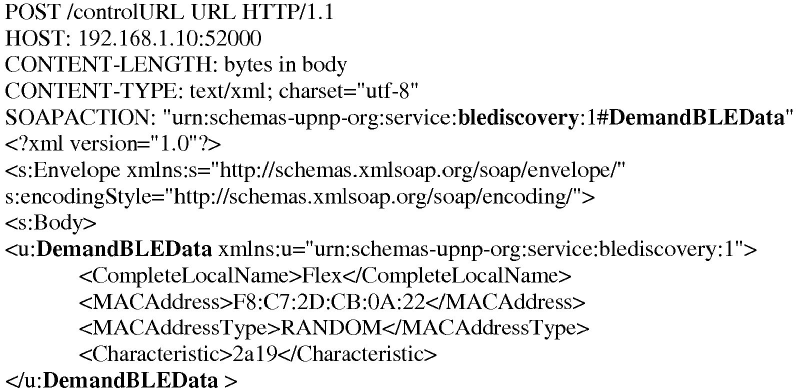

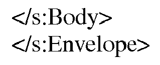

Cette commande P3 est reçue par le dispositif relais 21 dans une étape H3. Le dispositif relais 21 envoie alors une demande de lecture Q1 (« READ ») de la valeur de cette caractéristique.

Au cours d'une étape H4, le dispositif relais 21 reçoit dans un message Q2 cette valeur et la transfère à la passerelle d'accès 20 dans un message P4 DemandBLEDataResponse.

Le message P4 est reçu par la passerelle d'accès 20 dans une étape G3.

Ainsi, la passerelle d'accès 20 peut obtenir à tout instant une valeur de caractéristique mesurée ou gérée par le dispositif périphérique.

Dans une variante à cette autre mode de réalisation, la mise en œuvre de l'étape G1 est déclenchée par la réception d'une demande RequestBLEProfile en provenance d'un dispositif du réseau local.

Optionnellement, la passerelle d'accès 20 peut mettre en œuvre un contrôle des droits d'accès du dispositif demandeur au profil GATT et aux caractéristiques du dispositif périphérique 23 avant l'envoi de la commande P1 au dispositif relais 21.

Lors de la réception du profil GATT à l'étape G2, la passerelle d'accès 20 transmet ce profil au dispositif du réseau local l'ayant requis dans une réponse RequestBLEProfileResponse.

Ce dernier sélectionne alors une caractéristique à partir du profil et transmet la demande de lecture de la caractéristique à la passerelle d'accès 20. La passerelle d'accès 20 transmet alors la valeur de la caractéristique reçue à l'étape G3 au dispositif l'ayant requis.

Les différents modes de réalisation ont été décrits avec différentes étapes permettant d'optimiser la consommation énergétique des dispositifs relais 21, 24. Il est également possible de prévoir d'autres modes n'offrant pas cette optimisation. Dans une première variante, l'étape E5 visant à arrêter l'écoute de fréquences n'est pas mise en œuvre. Le dispositif relais 21 effectue alors en permanence l'écoute de fréquences en fonction des paramètres temporels définis par la passerelle d'accès 20. Dans une deuxième variante, l'étape E6 de désactivation du module d'accès radio BLE n'est pas mise en œuvre. Le réseau d'accès radio BLE existe en permanence au niveau du dispositif relais 21.

Les différents modes de réalisation ont été décrits à l'aide de mécanismes et protocole UPnP. Aucune limitation n'est attachée à l'utilisation du protocole UPnP. Les différents modes de réalisation peuvent également être mis en œuvre avec un protocole orienté binaire ou bien encore avec le protocole Alljoyn. Le protocole orienté binaire est un protocole de communication qui transmet les flux de données comme un ensemble de bits sans sémantique et s'appuie sur une messagerie définie entre deux dispositifs, un message comprenant un type de message et des paramètres. Ceci présente l'avantage de limiter la bande passante nécessaire à la mise en œuvre du procédé entre deux dispositifs.

A titre illustratif, un cas d'usage est décrit. Fabrice utilise un bracelet connecté du type FitBit Flex afin de compter le nombre de pas qu'il fait chaque jour et de mesurer la qualité de son sommeil la nuit. Son bracelet FitBit communique habituellement avec l'application FitBit sur son smartphone pour afficher à Fabrice le nombre de pas effectué et une estimation des calories dépensées. Fabrice dispose aussi chez lui d'une passerelle d'accès et de prises PLC qu'il a placées dans son salon et sa chambre. Par l'intermédiaire des prises PLC, la passerelle d'accès est capable de détecter la présence et l'absence du bracelet de Fabrice et de localiser dans quelle pièce est Fabrice. De plus, contrairement au smartphone de Fabrice qui coupe régulièrement son module d'accès radio WiFi afin d'économiser sa batterie, le bracelet de Fabrice annonce en permanence sa présence en Bluetooth LE. La passerelle d'accès est donc capable d'associer la présence du bracelet à la présence de Fabrice. La passerelle d'accès peut également, grâce à un algorithme d'apprentissage ou par configuration de l'utilisateur, désactiver la fonction « WiFi Extender » des prises PLC et le module WiFi de la passerelle d'accès lorsque cette dernière ne détecte plus la présence du bracelet. Elle est aussi capable de mettre en veille profonde le décodeur TV numérique si elle détecte une absence prolongée de la montre connectée du salon. Il est également alors possible lors d'une phase d'obtention des données d'obtenir le nombre de pas effectués et une estimation des calories dépensées.

Nous allons maintenant décrire une passerelle d'accès 20 dans un mode particulier de réalisation en référence à la figure 3. Une telle passerelle d'accès permet à au moins un dispositif d'un réseau local d'accéder à un réseau de communication étendu et est agencée pour coopérer avec un dispositif relais afin de déterminer une présence d'un dispositif périphérique 23, 26 dans une zone de service du réseau local. Elle comprend notamment :
- une zone mémoire 202, agencée pour mémoriser un programme qui comprend des instructions de code pour mettre en œuvre les étapes du procédé de détermination de présence, tel que décrit précédemment ;
- un processeur 201 pour exécuter des instructions de code de modules logiciels ;
- un module 203 d'émission/réception, agencé pour envoyer des données au dispositif relais et en recevoir en provenance du dispositif relais ;
- un module 204 d'accès au réseau de communication étendu ;
- un module 205 de commande, agencé pour envoyer une commande au dispositif relais ;
- une zone mémoire 206, agencée pour mémoriser une liste de dispositifs périphériques présents dans la zone de service du réseau local.

Il est ici souligné que la passerelle d'accès 20 comprend également d'autres modules de traitement, non représentés sur la figure 3, agencés pour mettre en œuvre les différentes fonctions d'une passerelle d'accès.

Le module 203 d'émission/réception est par exemple un module d'interface Ethernet. Le module 203 d'émission/réception est notamment agencé pour recevoir en provenance d'un dispositif relais une notification de détection d'un dispositif périphérique, émise par le dispositif relais suite à une réception d'un message d'annonce en provenance du dispositif périphérique. Ce dispositif périphérique est alors identifié comme présent dans la zone de service du réseau local et cette information est mémorisée dans la zone mémoire 306, comme décrit précédemment en relation avec la figure 2a.

Le module 205 de commande est notamment agencé pour commander au dispositif relais une exécution d'une écoute de fréquences d'accès d'un réseau d'accès radio.

Dans un mode de réalisation particulier, le module 205 de commande est en outre agencé pour commander une activation d'un module d'accès radio du dispositif relais préalablement à l'envoi de la commande d'écoute et pour commander une désactivation de ce module d'accès radio une fois l'écoute terminée.

Dans un mode de réalisation particulier, le module 205 de commande est en outre agencé pour déclencher une exécution d'une action dans le réseau local. Ce déclenchement fait par exemple suite à la détection de la présence d'un dispositif périphérique dans la zone de service. Dans un mode de réalisation particulier, l'action est déclenchée suite à la réception par le module 203 d'émission/réception d'une notification de détection comprenant une adresse dans le réseau local identifiant un dispositif maître contrôlant le dispositif périphérique.

Dans un mode de réalisation particulier, le module 205 de commande est en outre agencé pour commander au dispositif relais 21 de se connecter au dispositif périphérique 23 et d'obtenir un profil GATT, pour sélectionner à partir du profil GATT reçu une caractéristique et pour commander une obtention d'une valeur de la caractéristique sélectionnée identifiée par son identifiant universel unique. Le module 203 d'émission/réception est alors agencé pour recevoir en provenance d'un dispositif relais le profil GATT et la valeur de la caractéristique sélectionnée.

Nous allons maintenant décrire un dispositif relais 21, 24 dans un mode particulier de réalisation en référence à la figure 4. Un tel dispositif relais est agencé pour coopérer avec une passerelle d'accès afin de déterminer une présence d'un dispositif périphérique 23, 26 dans une zone de service du réseau local. Il comprend notamment :
- une zone mémoire 212, agencée pour mémoriser un programme qui comprend des instructions de code pour mettre en œuvre les étapes du procédé de détermination de présence, tel que décrit précédemment ;
- un processeur 211 pour exécuter des instructions de code de modules logiciels ;
- un module 213 d'émission/réception, agencé pour envoyer des données à la passerelle d'accès et en recevoir en provenance de celle-ci ;
- un module 214 d'accès radio ;
- un module 215 de traitement, agencé pour exécuter une commande reçue de la passerelle d'accès.

Le module 214 d'accès radio est agencé pour communiquer sur un réseau d'accès radio.

Le module 213 d'émission/réception est de même type que le module 203 correspondant de la passerelle d'accès. Il est notamment agencé pour recevoir en provenance de la passerelle d'accès une commande d'exécution d'une écoute de fréquences d'accès du réseau d'accès radio. Le module 213 d'émission/réception est en outre agencé pour envoyer à la passerelle d'accès une notification de détection du dispositif périphérique suite à la réception par le module 214 d'accès radio d'un message d'annonce.

Le module 214 d'accès radio est agencé pour exécuter une écoute de fréquences d'accès du réseau d'accès radio sur commande du module de traitement et pour recevoir un message d'annonce en provenance d'un dispositif périphérique.

Il est ici souligné que le dispositif relais 21 comprend également d'autres modules de d'interface, non représentés sur la figure 4. Il s'agit par exemple d'un module d'émission/réception, agencé pour communiquer avec un autre dispositif relais 24.

Dans un mode de réalisation particulier, le module 213 d'émission/réception est en outre agencé pour recevoir une commande d'une activation du module 214 d'accès radio du dispositif relais ou une commande de désactivation de ce module d'accès radio une fois l'écoute terminée.

Dans un mode de réalisation particulier, le module 213 d'émission/réception est en outre agencé pour recevoir une commande de connexion au dispositif périphérique 23 et pour recevoir une commande d'obtention d'une valeur d'une caractéristique identifiée par son identifiant universel unique. Le module 214 d'accès radio est alors agencé pour se connecter avec le dispositif périphérique, pour recevoir son profil GATT, pour transmettre au dispositif périphérique un ordre de lecture d'une valeur d'une caractéristique identifiée par son identifiant universel unique et obtenir en retour cette valeur.

La technique de détermination d'une présence d'un dispositif périphérique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 203, 204, 205 sont agencés pour mettre en œuvre le procédé de détermination précédemment décrit. Il s'agit de préférence d'un module logiciel comprenant des instructions logicielles pour faire exécuter les étapes du procédé de détermination précédemment décrit, mises en œuvre par une passerelle d'accès. L'invention concerne donc aussi :
- un programme pour une passerelle d'accès, comprenant des instructions de code de programme destinées à commander l'exécution des étapes du procédé de détermination précédemment décrit, lorsque ledit programme est exécuté par cette passerelle d'accès ;
- un support d'enregistrement lisible par une passerelle d'accès sur lequel est enregistré le programme pour une passerelle.

Dans un mode de réalisation particulier, les modules 213, 214, 215 sont agencés pour mettre en œuvre le procédé de détermination précédemment décrit. Il s'agit de préférence d'un module logiciel comprenant des instructions logicielles pour faire exécuter les étapes du procédé de détermination précédemment décrit, mises en œuvre par un dispositif relais. L'invention concerne donc aussi :
- un programme pour un dispositif relais, comprenant des instructions de code de programme destinées à commander l'exécution des étapes du procédé de détermination précédemment décrit, lorsque ledit programme est exécuté par ce dispositif relais ;
- un support d'enregistrement lisible par un dispositif relais sur lequel est enregistré le programme pour un dispositif relais.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de détermination décrit précédemment.

L'invention concerne également un système de détermination d'une présence d'un dispositif périphérique 23, 26 dans une zone de service d'un réseau local 2, ce réseau local comprenant une passerelle d'accès 20 telle que décrite précédemment et au moins un dispositif relais 21, 24 tel que décrit précédemment.

## Revendications

1. Procédé de détermination d'une présence d'un dispositif périphérique (23, 26) dans une zone de service d'un réseau local (2), ledit réseau local comprenant une passerelle d'accès (20) à un réseau de communication (1) et au moins un dispositif relais (21, 24), les échanges entre ladite passerelle et ledit au moins un dispositif relais étant conformes à un protocole réseau de type UPnP, ledit dispositif périphérique et le au moins un dispositif relais étant aptes à communiquer avec d'autres dispositifs par l'intermédiaire d'un réseau d'accès radio de type BLE, « Bluetooth Low Energy », ledit procédé comprenant les étapes suivantes mises en œuvre par la passerelle en tant que point de contrôle du réseau local :
- réception (E1) d'une notification en provenance d'au moins un des dispositifs relais connecté au réseau local, ladite notification annonçant une offre par ledit dispositif relais d'un service de découverte sur ledit réseau d'accès radio ;
- commande (E3) audit dispositif relais, ladite commande requérant une exécution d'une écoute de fréquences d'accès au réseau d'accès radio ;
- réception (E4) en provenance dudit au moins un dispositif relais d'une notification de détection du dispositif périphérique, émise par le dispositif relais suite à une réception (F4) d'un message d'annonce en provenance du dispositif périphérique sur une desdites fréquences d'accès au réseau d'accès radio, ledit dispositif périphérique étant alors identifié comme présent dans la zone de service.

2. Procédé selon la revendication 1, comprenant en outre une commande (E2) d'activation d'un module d'accès radio dudit dispositif relais préalablement à l'envoi de la commande d'écoute et une commande (E6) de désactivation dudit module une fois l'écoute terminée.

3. Procédé selon la revendication 1, dans lequel le message d'annonce reçu par le dispositif relais comprend une donnée représentative d'un signal radio reçu du dispositif relais, envoyée à la passerelle en association avec la donnée de détection.

4. Procédé selon la revendication 1, dans lequel le message d'annonce reçu par le dispositif relais comprend en outre une adresse dans le réseau local identifiant un dispositif maître contrôlant le dispositif périphérique.

5. Procédé selon la revendication 1, comprenant suite à une détection de la présence du dispositif périphérique dans la zone de service, une étape d'exécution d'une action dans le réseau local.

6. Procédé selon la revendication 5, dans lequel le message d'annonce reçu par le dispositif relais comprend en outre une adresse dans le réseau local identifiant un dispositif maître (22) contrôlant le dispositif périphérique et l'action correspond à une activation d'un deuxième module d'accès radio du dispositif relais, afin d'établir une connexion avec le dispositif maître.

7. Procédé selon la revendication 1, comprenant en outre une étape d'obtention d'une valeur d'une caractéristique gérée par le dispositif périphérique présent.

8. Passerelle d'accès (20) permettant à au moins un dispositif d'un réseau local (2) d'accéder à un réseau de communication (1), agencée pour coopérer avec un dispositif relais appartenant au réseau local afin de déterminer une présence d'un dispositif périphérique (23, 26) dans une zone de service du réseau local, les échanges entre ladite passerelle et ledit au moins un dispositif relais étant conformes à un protocole réseau de type UPnP, ladite passerelle en tant que point de contrôle du réseau local comprenant :
- un module de commande (205) d'au moins un dispositif relais, agencé pour commander au dispositif relais une exécution d'une écoute de fréquences d'accès d'un réseau d'accès radio de type BLE, « Bluetooth Low Energy » ;
- un module de réception (203), agencé pour recevoir en provenance dudit au moins un dispositif relais connecté au réseau local une notification annonçant une offre par ledit dispositif relais d'un service de découverte sur ledit réseau d'accès radio et une notification de détection du dispositif périphérique, émise par le dispositif relais suite à une réception d'un message d'annonce en provenance du dispositif périphérique sur une desdites fréquences d'accès au réseau d'accès radio, ledit dispositif périphérique étant alors identifié comme présent dans la zone de service du réseau local.

9. Dispositif relais dans un réseau local, agencé pour coopérer avec une passerelle d'accès en tant que point de contrôle du réseau local, ladite passerelle permettant aux dispositifs du réseau local (2) d'accéder à un réseau de communication (1) afin de déterminer d'une présence d'un dispositif périphérique (23, 26) dans une zone de service d'un réseau local (2), les échanges entre ladite passerelle et ledit dispositif relais étant conformes à un protocole réseau de type UPnP, ledit dispositif relais comprenant :
- un module de réception (213), agencé pour recevoir en provenance de la passerelle d'accès une commande d'exécution d'une écoute de fréquences d'accès d'un réseau d'accès radio de type BLE, « Bluetooth Low Energy » ;
- un module d'accès radio (214), agencé pour exécuter une écoute de fréquences d'accès du réseau d'accès radio et pour recevoir un message d'annonce en provenance du dispositif périphérique sur une desdites fréquences d'accès au réseau d'accès radio ;
- un module d'émission (213), agencé pour envoyer à la passerelle d'accès une notification annonçant une offre par ledit dispositif relais d'un service de découverte sur ledit réseau d'accès radio et une notification de détection du dispositif périphérique suite à la réception du message d'annonce.

10. Système de détermination d'une présence d'un dispositif périphérique (23, 26) dans une zone de service d'un réseau local (2), ledit réseau local comprenant une passerelle d'accès (20) selon la revendication 8 et au moins un dispositif relais (21, 24) selon la revendication 9.

11. Programme pour une passerelle, comprenant des instructions de code de programme destinées à commander l'exécution des étapes du procédé de détermination selon l'une des revendications 1 à 7 mises en œuvre par la passerelle, lorsque ledit programme est exécuté par ladite passerelle.

12. Support d'enregistrement lisible par une passerelle sur lequel est enregistré le programme selon la revendication 11.

## Patentansprüche

1. Verfahren zur Feststellung eines Vorhandenseins einer Peripherievorrichtung (23, 26) in einem Versorgungsbereich eines lokalen Netzes (2), wobei das lokale Netz ein Zugangsgateway (20) zu einem Kommunikationsnetz (1) und mindestens eine Relaisvorrichtung (21, 24) enthält, wobei die Austauschvorgänge zwischen dem Gateway und der mindestens einen Relaisvorrichtung einem Netzprotokoll vom Typ UPnP entsprechen, wobei die Peripherievorrichtung und die mindestens eine Relaisvorrichtung geeignet sind, mittels eines Funkzugangsnetzes des Typs BLE, "Bluetooth Low Energy", mit anderen Vorrichtungen zu kommunizieren, wobei das Verfahren die folgenden Schritte enthält, die vom Gateway als Kontrollpunkt des lokalen Netzes durchgeführt werden:
- Empfang (E1) einer Mitteilung von mindestens einer der Relaisvorrichtungen, die mit dem lokalen Netz verbunden ist, wobei die Mitteilung ein Angebot der Relaisvorrichtung eines Discovery-Diensts auf dem Funkzugangsnetz ankündigt;
- Befehl (E3) an die Relaisvorrichtung, wobei der Befehl eine Ausführung eines Abhörens von Zugangsfrequenzen zum Funkzugangsnetz anfordert;
- Empfang (E4) von der mindestens einen Relaisvorrichtung einer Erkennungsmitteilung der Peripherievorrichtung, gesendet von der Relaisvorrichtung nach einem Empfang (F4) einer Ankündigungsnachricht von der Peripherievorrichtung auf einer der Zugangsfrequenzen zum Funkzugangsnetz, wobei die Peripherievorrichtung dann als im Versorgungsbereich vorhanden identifiziert wird.

2. Verfahren nach Anspruch 1, das außerdem einen Befehl (E2) zur Aktivierung eines Funkzugangsmoduls der Relaisvorrichtung vor dem Senden des Abhörbefehls und einen Befehl (E6) zur Deaktivierung des Moduls nach der Beendigung des Abhörens enthält.

3. Verfahren nach Anspruch 1, wobei die von der Relaisvorrichtung empfangene Ankündigungsnachricht einen für ein von der Relaisvorrichtung empfangenes Funksignal repräsentativen Datenwert enthält, der zusammen mit dem Erkennungsdatenwert an das Gateway geschickt wird.

4. Verfahren nach Anspruch 1, wobei die von der Relaisvorrichtung empfangene Ankündigungsnachricht außerdem eine Adresse im lokalen Netz enthält, die eine die Peripherievorrichtung steuernde Master-Vorrichtung identifiziert.

5. Verfahren nach Anspruch 1, das nach einer Erkennung des Vorhandenseins der Peripherievorrichtung im Versorgungsbereich einen Schritt der Ausführung einer Aktion im lokalen Netz enthält.

6. Verfahren nach Anspruch 5, wobei die von der Relaisvorrichtung empfangene Ankündigungsnachricht außerdem eine Adresse im lokalen Netz enthält, die eine die Peripherievorrichtung steuernde Master-Vorrichtung (22) identifiziert, und die Aktion einer Aktivierung eines zweiten Funkzugangsmoduls der Relaisvorrichtung entspricht, um eine Verbindung mit der Master-Vorrichtung aufzubauen.

7. Verfahren nach Anspruch 1, das außerdem einen Schritt des Erhalts eines Werts eines von der vorhandenen Peripherievorrichtung verwalteten Merkmals enthält.

8. Zugangsgateway (20), das es mindestens einer Vorrichtung eines lokalen Netzes (2) ermöglicht, auf ein Kommunikationsnetz (1) zuzugreifen, das eingerichtet ist, mit einer zum lokalen Netz gehörenden Relaisvorrichtung zusammenzuwirken, um ein Vorhandensein einer Peripherievorrichtung (23, 26) in einem Versorgungsbereich des lokalen Netzes festzustellen, wobei die Austauschvorgänge zwischen dem Gateway und der mindestens einen Relaisvorrichtung einem Netzprotokoll des Typs UPnP entsprechen, wobei das Gateway als Kontrollpunkt des lokalen Netzes enthält:
- ein Befehlsmodul (205) mindestens einer Relaisvorrichtung, das eingerichtet ist, der Relaisvorrichtung eine Ausführung eines Abhörens von Zugangsfrequenzen eines Funkzugangsnetzes des Typs BLE, "Bluetooth Low Energy", zu befehlen;
- ein Empfangsmodul (203), das eingerichtet ist, von der mindestens einen mit dem lokalen Netz verbundenen Relaisvorrichtung eine Mitteilung, die ein Angebot von der Relaisvorrichtung eines Discovery-Diensts auf dem Funkzugangsnetz ankündigt, und eine Mitteilung der Erkennung der Peripherievorrichtung zu empfangen, die von der Relaisvorrichtung nach einem Empfang einer Ankündigungsnachricht von der Peripherievorrichtung auf einer der Zugangsfrequenzen zum Funkzugangsnetz gesendet wird, wobei die Peripherievorrichtung dann als im Versorgungsbereich des lokalen Netzes vorhanden identifiziert wird.

9. Relaisvorrichtung in einem lokalen Netz, die eingerichtet ist, mit einem Zugangsgateway als Kontrollpunkt des lokalen Netzes zusammenzuwirken, wobei das Gateway den Vorrichtungen des lokalen Netzes (2) ermöglicht, auf ein Kommunikationsnetz (1) zuzugreifen, um ein Vorhandensein einer Peripherievorrichtung (23, 26) in einem Versorgungsbereich eines lokalen Netzes (2) festzustellen, wobei die Austauschvorgänge zwischen dem Gateway und der Relaisvorrichtung einem Netzprotokoll des Typs UPnP entsprechen, wobei die Relaisvorrichtung enthält:
- ein Empfangsmodul (213), das eingerichtet ist, vom Zugangsgateway einen Ausführbefehl eines Abhörens von Zugangsfrequenzen eines Funkzugangsnetzes des Typs BLE, "Bluetooth Low Energy", zu empfangen;
- ein Funkzugangsmodul (214), das eingerichtet ist, ein Abhören von Zugangsfrequenzen des Funkzugangsnetzes auszuführen und eine Ankündigungsnachricht von der Peripherievorrichtung auf einer der Zugangsfrequenzen zum Funkzugangsnetz zu empfangen;
- ein Sendemodul (213), das eingerichtet ist, an das Zugangsgateway eine Mitteilung, die ein Angebot durch die Relaisvorrichtung eines Discovery-Diensts auf dem Funkzugangsnetz ankündigt, und eine Mitteilung der Erkennung der Peripherievorrichtung nach dem Empfang der Ankündigungsnachricht zu schicken.

10. System zur Feststellung eines Vorhandenseins einer Peripherievorrichtung (23, 26) in einem Versorgungsbereich eines lokalen Netzes (2), wobei das lokale Netz ein Zugangsgateway (20) nach Anspruch 8 und mindestens eine Relaisvorrichtung (21, 24) nach Anspruch 9 enthält.

11. Programm für ein Gateway, das Programmcodeanweisungen enthält, die dazu bestimmt sind, die Ausführung der Schritte des Feststellungsverfahrens nach einem nach einem der Ansprüche 1 bis 7 zu befehlen, die vom Gateway durchgeführt werden, wenn das Programm vom Gateway ausgeführt wird.

12. Speicherträger, der von einem Gateway lesbar ist, auf dem das Programm nach Anspruch 11 gespeichert ist.

## Claims

1. Method for determining the presence of a peripheral device (23, 26) in a service area of a local area network (2), said local area network comprising an access gateway (20) to a communication network (1) and at least one relay device (21, 24), the exchanges between said gateway and said at least one relay device being in accordance with a network protocol of UPnP type, said peripheral device and the at least one relay device being able to communicate with other devices via a radio access network of BLE, Bluetooth Low Energy, type, said method comprising the following steps implemented by the gateway as a control point for the local area network:
- receiving (E1) a notification from at least one of the relay devices connected to the local area network, said notification advertising an offer, by said relay device, of a discovery service over said radio access network;
- commanding (E3) said relay device, said command requiring the execution of a scan of access frequencies for accessing the radio access network;
- receiving (E4), from said at least one relay device, a notification of detection of the peripheral device, sent by the relay device following reception (F4) of an advertisement message from the peripheral device on one of said access frequencies for accessing the radio access network, said peripheral device then being identified as present in the service area.

2. Method according to Claim 1, further comprising a command (E2) to activate a radio access module of said relay device prior to dispatching the scan command and a command (E6) to deactivate said module once the scan has terminated.

3. Method according to Claim 1, wherein the advertisement message received by the relay device comprises a datum which is representative of a radio signal received from the relay device and which is dispatched to the gateway in association with the detection datum.

4. Method according to Claim 1, wherein the advertisement message received by the relay device further comprises an address in the local area network identifying a master device controlling the peripheral device.

5. Method according to Claim 1, comprising, following detection of the presence of the peripheral device in the service area, a step of executing an action in the local area network.

6. Method according to Claim 5, wherein the advertisement message received by the relay device further comprises an address in the local area network identifying a master device (22) controlling the peripheral device and the action corresponds to activating a second radio access module of the relay device, in order to establish a connection with the master device.

7. Method according to Claim 1, further comprising a step of obtaining a value of a characteristic managed by the peripheral device present.

8. Access gateway (20) making it possible for at least one device of a local area network (2) to access a communication network (1) and arranged to cooperate with a relay device belonging to the local area network in order to determine the presence of a peripheral device (23, 26) in a service area of the local area network, the exchanges between said gateway and said at least one relay device being in accordance with a network protocol of UPnP type, said gateway, as a control point for the local area network, comprising:
- a command module (205) for at least one relay device, arranged to command the relay device to execute a scan of access frequencies of a radio access network of BLE, Bluetooth Low Energy, type;
- a receive module (203), arranged to receive, from said at least one relay device connected to the local area network, a notification advertising an offer, by said relay device, of a discovery service over said radio access network and a notification of detection of the peripheral device, sent by the relay device following reception of an advertisement message from the peripheral device on one of said access frequencies for accessing the radio access network, said peripheral device then being identified as present in the service area of the local area network.

9. Relay device in a local area network, arranged to cooperate with an access gateway as a control point for the local area network, said gateway making it possible for the devices of the local area network (2) to access a communication network (1) in order to determine the presence of a peripheral device (23, 26) in a service area of a local area network (2), the exchanges between said gateway and said relay device being in accordance with a network protocol of UPnP type, said relay device comprising:
- a receive module (213), arranged to receive, from the access gateway, a command to execute a scan of access frequencies of a radio access network of BLE, Bluetooth Low Energy, type;
- a radio access module (214), arranged to execute a scan of access frequencies of the radio access network and to receive an advertisement message from the peripheral device on one of said access frequencies for accessing the radio access network;
- a send module (213), arranged to dispatch, to the access gateway, a notification advertising an offer, by said relay device, of a discovery service over said radio access network and a notification of detection of the peripheral device following reception of the advertisement message.

10. System for determining the presence of a peripheral device (23, 26) in a service area of a local area network (2), said local area network comprising an access gateway (20) according to Claim 8 and at least one relay device (21, 24) according to Claim 9.

11. Program for a gateway, comprising program code instructions intended to command the execution of the steps of the determining method according to one of Claims 1 to 7 implemented by the gateway, when said program is executed by said gateway.

12. Storage medium which can be read by a gateway and on which the program according to Claim 11 is stored.
